# EUROPÄISCHE PATENTSCHRIFT

(11) **EP 1 144 234 B1**
(45) Veröffentlichungstag und Bekanntmachung des Hinweises auf die Patenterteilung: **23.03.2005**
(21) Anmeldenummer: 00903636.9
(22) Anmeldetag: 26.01.2000
(51) Int. Cl.: B60T 11/20

(54) **HAUPTZYLINDER FÜR EINE HYDRAULISCHE FAHRZEUGBREMSANLAGE MIT VERBESSERTER RÜCKSTELLFEDERFESSELUNG**
MASTER CYLINDER FOR A VEHICLE HYDRAULIC BRAKING SYSTEM WITH IMPROVED RETURN SPRING POSITIONING
MAITRE-CYLINDRE POUR SYSTEME DE FREINAGE HYDRAULIQUE POUR VEHICULE AVEC POSITIONNEMENT A RESSORT DE RAPPEL AMELIORE

(30) Priorität: 26.01.1999 DE 19903014
(43) Veröffentlichungstag der Anmeldung: 17.10.2001
(73) Patentinhaber: LUCAS INDUSTRIES PUBLIC LIMITED COMPANY, Solihull B90 4LA (GB)
(72) Erfinder: LANGE, Hans-Christoph, D-56218 Mülheim-Kärlich (DE); LINDE, Peter, D-56191 Weitersburg (DE); STRUSCHKA, Martin, D-56112 Lahnstein (DE); UNTERBERG, Hartmut, D-56072 Koblenz (DE)
(74) Vertreter: Beyer, Andreas, Dr.
(86) Internationale Anmeldenummer: PCT/EP2000/000585
(87) Internationale Veröffentlichungsnummer: WO 2000/044600

(56) Entgegenhaltungen:
- EP-A- 0 095 404
- DE-A- 2 517 282
- US-A- 3 839 867

## Beschreibung

Die Erfindung betrifft einen Hauptzylinder für eine hydraulische Fahrzeugbremsanlage mit einem Gehäuse und einer darin ausgebildeten Bohrung, in der ein erster Kolben und ein in axialem Abstand zu ihm angeordneter zweiter Kolben abdichtend und verschiebbar geführt sind, und mit einer zwischen dem ersten Kolben und dem zweiten Kolben angeordneten Fesselungseinrichtung für eine Rückstellfeder des ersten Kolbens, die die Rückstellfeder daran hindert, über ein bestimmtes Maß hinaus komprimiert und expandiert zu werden. Hauptzylinder dieser Art, die auch als Geberzylinder bezeichnet werden, werden millionenfach verwendet und sind beispielsweise aus der DE 195 20 670 A1 bekannt.

Die Fesselungseinrichtung für die Rückstellfeder des ersten Kolbens sorgt einerseits dafür, daß beim Druckentlasten des Hauptzylinders sich wieder ein definierter Abstand zwischen den beiden Kolben einstellt, so daß die beiden Kolben in ihrer Ruhestellung zueinander genau positioniert sind, und sorgt andererseits dafür, daß bei einem beispielsweise durch ein Leck verursachten Druckverlust in der Primärdruckkammer des Hauptzylinders, auf die der erste Kolben einwirkt, möglichst schnell ein Bremsdruck in der möglicherweise noch funktionsfähigen Sekundärdruckkammer aufgebaut wird, auf die der zweite Kolben einwirkt, indem die Fesselungseinrichtung nach Überschreiten einer vorgegebenen Komprimierung der Rückstellfeder des ersten Kolbens einen starren Durchtrieb zwischen dem ersten Kolben und dem zweiten Kolben herstellt (Fail-Safe Funktion).

Bekannte Fesselungseinrichtungen der beschriebenen Art sind relativ kompliziert aufgebaut und ihre Montage ist zeitaufwendig. So besteht beispielsweise die aus der DE 195 20 670 A1 bekannte Fesselungseinrichtung aus zwei im Querschnitt U-förmigen Blechhülsen, welche durch einen Distanzstift miteinander verbunden sind. Dieser Distanzstift hat an seinem einen Ende einen verbreiterten Kopf, der formschlüssig mit der einen Blechhülse zusammenwirkt. Die Verbindung des Distanzstiftes mit der anderen Blechhülse erfolgt, indem auf das entsprechende Ende des Distanzstiftes ein ringförmiges Fixierelement aufgesteckt und dann durch Verformung des noch überstehenden Teils des Distanzstiftes mit letzterem vernietet wird. Dies kann erst am Ende des Zusammenbaus der Fesselungseinrichtung geschehen und die gefesselte Rückstellfeder muß des weiteren mit einer separaten Vorrichtung stark komprimiert werden, da das Ende des Distanzstiftes aus der Blechhülse herausragen muß, um den Vernietungsprozeß durchführen zu können. Darüber hinaus führt eine solche Art der Fixierung zu größeren Längentoleranzen der Fesselungseinrichtungen.

Die DE 25 17 282 A offenbart einen Hauptbremszylinder nach dem Oberbegriff des Anspruchs 1. Der Erfindung liegt die Aufgabe zugrunde, einen Hauptzylinder bereitzustellen, dessen Fesselungseinrichtung einfach herzustellen und leicht zu montieren ist und die darüber hinaus eine höhere Längengenauigkeit bietet.

Diese Aufgabe ist erfindungsgemäß mit einem Hauptzylinder gelöst, dessen Fesselungseinrichtung die im Patentanspruch 1 angegebenen Merkmale aufweist. Im Gegensatz zum Stand der Technik besteht bei dem erfindungsgemäßen Hauptzylinder die Fesselungseinrichtung aus nur noch zwei Bauteilen, einem ersten, im wesentlichen hülsenförmigen Bauteil und einem zweiten, im wesentlichen stiftförmigen Bauteil. Durch den Flansch am stiftförmigen Bauteil und den damit zusammenwirkenden ersten Aufnahmeflansch am hülsenförmigen Bauteil sowie die seitliche Einführöffnung im hülsenförmigen Bauteil, die mit dem offenen Bereich des ersten Aufnahmeflansches verbunden ist, können diese beiden Bauteile durch einfaches Zusammenfügen miteinander gekoppelt werden.

Die Einführöffnung in der Mantelfläche des hülsenförmigen Bauteils, die zumindest an einer Stelle so groß sein muß, daß der am stiftförmigen Bauteil vorhandene Flansch durch sie hindurchpaßt, kann entweder nahe oder sogar benachbart zum offenen Bereich des Aufnahmeflansches oder auch entfernt davon angeordnet sein. Ist die Einführöffnung axial vom Aufnahmeflansch entfernt angeordnet, dann kann der Öffnungsquerschnitt des die Einführöffnung mit dem Aufnahmeflansch verbindenden Ausschnitts in der Mantelfläche des hülsenförmigen Bauteils kleiner als der Öffnungsquerschnitt der Einführöffnung ausgeführt werden, wodurch eine seitliche Führung des in das hülsenförmige Bauteil eingebrachten Flansches des stiftförmigen Bauteils bereitgestellt ist, die ein Herausdrücken des Flansches aus dem hülsenförmigen Bauteil verhindert.

Gemäß einer bevorzugten Weiterbildung des erfindungsgemäßen Hauptzylinders weist das vom stiftförmigen Bauteil entfernte Ende des hülsenförmigen Bauteils einen zweiten radial nach innen ragenden, U-förmigen Aufnahmeflansch auf, der mit einem radial nach außen ragenden Flansch am zweiten Kolben formschlüssig zusammenwirkt. Damit der am zweiten Kolben vorhandene Flansch mit dem hülsenförmigen Bauteil zusammengefügt werden kann, weist letzteres in seiner Mantelfläche eine mit dem offenen Bereich des zweiten Aufnahmeflansches verbundene Einführöffnung auf, die das seitliche Einführen des Flansches in das hülsenförmige Bauteil gestattet. Wenn die zuvor beschriebene, axial von dem ersten Aufnahmeflansch entfernt angeordnete Einführöffnung angrenzend an den zweiten Aufnahmeflansch angeordnet ist, dann kann diese Einführöffnung sowohl zum Einführen des am stiftförmigen Bauteil vorhandenen Flansches als auch des am zweiten Kolben vorhandenen Flansches in das hülsenförmige Bauteil dienen (in dieser Reihenfolge).

Es können jedoch auch zwei Einführöffnungen in dem hülsenförmigen Bauteil vorhanden sein, von denen eine mit dem offenen Bereich des ersten Aufnahmeflansches und die zweite mit dem offenen Bereich des Aufnahmeflansches verbunden ist. Diese beiden Einführöffnungen können auf der selben Seite oder auch auf gegenüberliegenden Seiten des hülsenförmigen Bauteils angeordnet sein.

Analog können sich die beiden U-förmigen Aufnahmeflansche zur selben Seite oder zu gegenüberliegenden Seiten des hülsenförmigen Bauteils hin öffnen. Wenn beide Aufnahmeflansche sich zur selben Seite des hülsenförmigen Bauteils hin öffnen, dann erstreckt sich gemäß einer Ausführungsform der Fesselungseinrichtung des erfindungsgemäßen Hauptzylinders eine einzige Einführöffnung in der Mantelfläche des hülsenförmigen Bauteils vom offenen Bereich des ersten Aufnahmeflansches bis zum offenen Bereich des zweiten Aufnahmeflansches. Bei einer anderen Ausführungsform, bei der sich die beiden Aufnahmeflansche ebenfalls zur selben Seite des hülsenförmigen Bauteils hin öffnen, sind zwei Einführöffnungen vorhanden, die durch einen Abschnitt des Mantels des hülsenförmigen Bauteils voneinander getrennt sind. Dieser Mantelabschnitt verbessert die Stabilität des hülsenförmigen Bauteils und stellt zugleich eine seitliche Führung für den am stiftförmigen Bauteil vorhandenen Flansch dar, wenn er in das hülsenförmigen Bauteil eingeführt worden ist und die Rückstellfeder komprimiert wird.

Bei allen Ausführungsformen des erfindungsgemäßen Hauptzylinders können der erste U-förmige Aufnahmeflansch oder der zweite U-förmige Aufnahmeflansch oder auch beide Aufnahmeflansche des hülsenförmigen Bauteils jeweils einen oder mehrere Rastvorsprünge aufweisen, die nach dem Zusammenfügen des stiftförmigen Bauteils mit dem ersten Aufnahmeflansch bzw. des am zweiten Kolben vorhandenen Flansches mit dem zweiten Aufnahmeflansch ein selbsttätiges Lösen der geschaffenen Verbindung in seitlicher Richtung verhindern oder einem solchen Lösen zumindest entgegenwirken.

Des weiteren kann bei allen Ausführungsformen des erfindungsgemäßen Hauptzylinders der Mantel des hülsenförmigen Bauteils eine oder mehrere Durchbrechungen aufweisen, um die Durchströmbarkeit der Fesselungseinrichtung mit Hydraulikfluid zu verbessern. Eine solche Ausbildung erleichtert das Befüllen der bereits erwähnten Primärdruckkammer des Hauptzylinders, in der sich die Fesselungseinrichtung befindet, mit Hydraulikfluid. Im Extremfall kann das hülsenförmige Bauteil auf seine beiden Aufnahmeflansche und mehrere (wenigstens zwei) axiale stegförmige Verbindungen zwischen diesen beiden Aufnahmeflanschen reduziert sein. Die stegförmigen Verbindungen zwischen den beiden Aufnahmeflanschen werden dabei so angeordnet, daß eine ausreichende Stabilität des hülsenförmigen Bauteils gesichert ist.

Gemäß einer Weiterbildung kann bei allen Ausführungsformen das stiftförmige Bauteil an seinem vom hülsenförmigen Bauteil entfernten Ende eine Bohrung aufweisen, in die ein mit dieser Bohrung verklebter oder verschweißter Zapfen eines Federhaltekopfes eintaucht. Eine solche Ausbildung des stiftförmigen Bauteils gestattet es, während der Montage der Fesselungseinrichtung deren maximale Länge genauestens einzustellen und dann zu fixieren.

Mehrere bevorzugte Ausführungsbeispiele eines erfindungsgemäßen Hauptzylinders werden im folgenden anhand der beigefügten, schematischen Figuren näher erläutert. Es zeigt:
- Fig. 1: ein erstes Ausführungsbeispiel eines erfindungsgemäßen Hauptzylinders im Längsschnitt,
- Fig. 2: die aus Fig. 1 ersichtliche Fesselungseinrichtung für die Rückstellfeder des ersten Kolbens in räumlicher Darstellung,
- Fig. 3a-3c: eine abgewandelte Ausführungsform der Fesselungseinrichtung aus Fig. 1 und ihren Zusammenbau in räumlicher Darstellung,
- Fig. 4: ein nochmals abgewandeltes Ausführungsbeispiel eines Teils der Fesselungseinrichtung aus Fig. 1 in räumlicher Darstellung,
- Fig. 5: ein weiteres Ausführungsbeispiel der Fesselungseinrichtung aus Fig. 1 in räumlicher Darstellung, und
- Fig. 6: eine Ansicht ähnlich Fig. 1 mit einer längeneinstellbaren Fesselungseinrichtung.

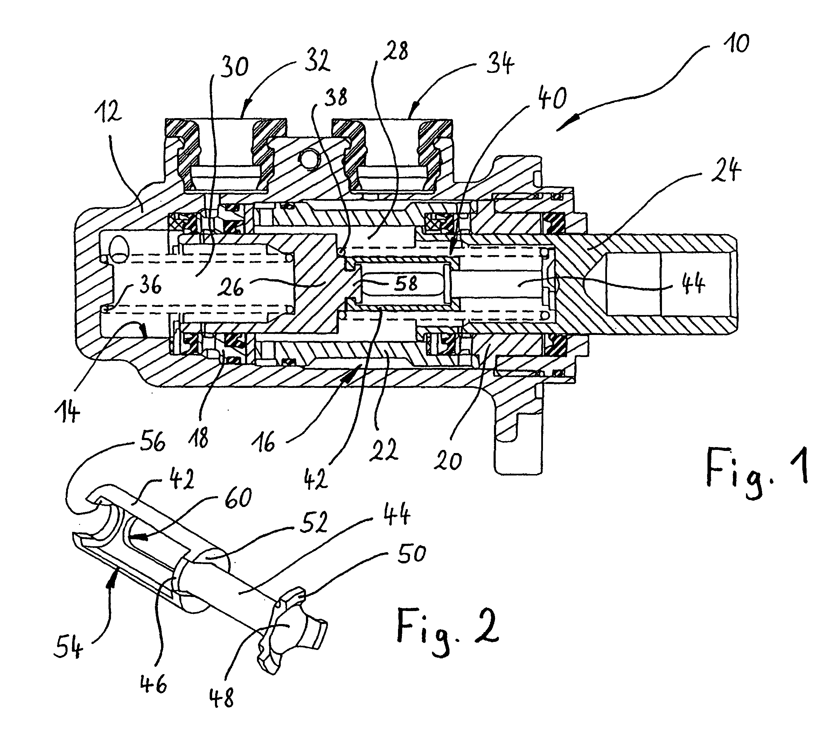

Fig. 1 zeigt einen auch als Hauptbremszylinder bezeichneten Hauptzylinder 10 für eine hydraulische Fahrzeugbremsanlage. Der Hauptzylinder 10 hat ein Gehäuse 12 mit einer hier stufenförmig ausgeführten Bohrung 14, in die ein Distanzgehäuse 16 eingeschoben ist, das im wesentlichen aus zwei Spannringen 18 und 20 sowie einer dazwischen angeordneten Distanzhülse 22 besteht und das zwei axial voneinander beabstandete Kolben 24 und 26 abdichtend und verschieblich führt.

Der erste Kolben 24 wirkt zur Druckerzeugung auf eine Primärdruckkammer 28 ein, während der zweite Kolben 26 auf eine Sekundärdruckkammer 30 einwirkt. Im betriebsbereiten Zustand des Hauptzylinders 10 sind sowohl die Primärdruckkammer 28 als auch die Sekundärdruckkammer 30 vollständig mit Hydraulikfluid gefüllt, welches aus einem nicht gezeigten Hydraulikfluidvorratsbehälter durch Anschlußöffnungen 32 und 34 im Gehäuse 12 des Hauptzylinders 10 und weiter durch hier nicht näher bezeichnete Bohrungen in den Spannringen 18 und 20 und den beiden Kolben 24 und 26 in die Primärdruckkammer 28 bzw. die Sekundärdruckkammer 30 gelangt.

Zur Rückstellung der beiden Kolben 24 und 26 in ihre Ruhestellung dienen eine sich am Boden der Bohrung 14 abstützende Rückstellfeder 36, die den zweiten Kolben 26 in seine Ausgangs- bzw. Ruhestellung vorspannt, und eine sich auf der gegenüberliegenden Seite des zweiten Kolbens 26 abstützende Rückstellfeder 38, die den ersten Kolben 24 in seine Ausgangs- bzw. Ruhestellung vorspannt. Die letztgenannte Rückstellfeder 38 ist mittels einer Fesselungseinrichtung 40 gefesselt, die eine Komprimierung und eine Expansion der Rückstellfeder 38 über ein bestimmtes, vorab festgelegtes Maß hinaus verhindert.

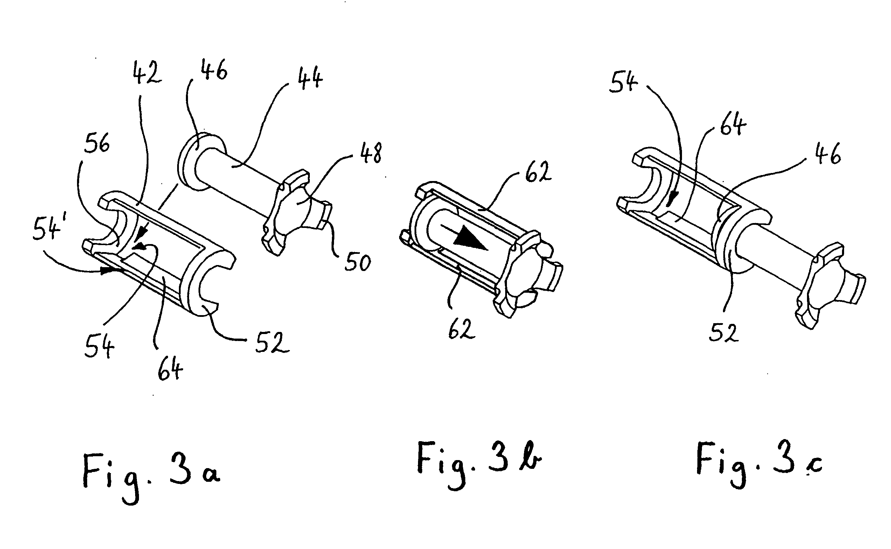

Die Fesselungseinrichtung 40, deren Aufbau genauer aus Fig. 2 hervorgeht, ist im gezeigten Ausführungsbeispiel unmittelbar zwischen den beiden Kolben 24 und 26 eingespannt. Sie besteht aus einem ersten, im wesentlichen hülsenförmigen Bauteil 42 und einem damit lösbar verbundenen zweiten, im wesentlichen stiftförmigen Bauteil 44. Zur Verbindung mit dem hülsenförmigen Bauteil 42 weist das stiftförmige Bauteil 44 an seinem einen Ende einen kreisscheibenförmigen, radial nach außen ragenden Flansch 46 auf, der im dargestellten Ausführungsbeispiel einstückig mit dem stiftförmigen Bauteil 44 ausgebildet ist. An seinem gegenüberliegenden Ende ist das stiftförmige Bauteil 44 mit einem Federhaltekopf versehen, der allgemein mit 48 bezeichnet ist und der gemäß dem Ausführungsbeispiel der Figuren 1 und 2 auf drei radial nach außen stehende Arme 50 reduziert ist. An dem Federhaltekopf 48 bzw. an dessen Armen 50 stützt sich das eine Ende der Rückstellfeder 38 ab, deren anderes Ende sich in den dargestellten Ausführungsbeispielen am zweiten Kolben 26 abstützt. In Abweichung der hier gezeigten Ausführungsbeispiele kann auch das hülsenförmige Bauteil 42 an seinem dem zweiten Kolben 26 zugewandten Ende einen Federhaltekopf aufweisen.

Das hülsenförmige Bauteil 42 ist an seinem dem stiftförmigen Bauteil 44 zugekehrten Ende mit einem ersten radial nach innen ragenden, U-förmigen Aufnahmeflansch 52 versehen, der zum Zusammenwirken mit dem Flansch 46 des stiftförmigen Bauteils 44 bestimmt ist. Damit das stiftförmige Bauteil 44 und insbesondere sein Flansch 46 mit dem hülsenförmigen Bauteil 42 zusammengefügt werden kann, weist letzteres in seiner Mantelfläche eine Einführöffnung 54 auf, die mit dem offenen Bereich des U-förmigen Aufnahmeflansches 52 in Verbindung steht und deren Öffnungsquerschnitt wenigstens an einer Stelle derart bemessen ist, daß der Flansch 46 des stiftförmigen Bauteils 44 von der Seite her durch die Einführöffnung 54 in das hülsenförmige Bauteil 42 eingeführt werden kann. Bei dem Ausführungsbeispiel der Fig. 2 erstreckt sich die Einführöffnung 54 über die gesamte Länge des hülsenförmigen Bauteils 52, so daß der Flansch 46 an jeder beliebigen Stelle ihrer Erstreckung in das hülsenförmige Bauteil 42 einführbar ist.

Ist der am stiftförmigen Bauteil 44 ausgebildete Flansch 46 wie in Fig. 2 wiedergegeben in das hülsenförmige Bauteil 42 eingeführt, können die beiden Bauteile 42 und 44 relativ zueinander in axialer Richtung verschoben werden. Sobald jedoch der Flansch 46 mit dem Aufnahmeflansch 52 in Berührung kommt, verhindert der durch die beiden Flansche 46, 52 gebildete Formschluß eine weitere Auseinanderbewegung der beiden Bauteile 42 und 44 in axialer Richtung.

Damit die Fesselungseinrichtung 40 einfach an dem zweiten Kolben 26 befestigt werden kann, weist das hülsenförmige Bauteil 42 an seinem dem zweiten Kolben 26 zugekehrten Ende einen zweiten radial nach innen ragenden, U-förmigen Aufnahmeflansch 56 auf, der zum Zusammenwirken mit einem am zweiten Kolben 26 ausgebildeten, kreisscheibenförmigen Flansch 58 bestimmt ist. Gemäß Fig. 2 öffnen sich beide Aufnahmeflansche 52 und 56 zur selben Seite des hülsenförmigen Bauteils 42 hin, so daß der Flansch 58 des zweiten Kolbens 26 ebenso wie der Flansch 46 am stiftförmigen Bauteil 44 durch die Einführöffnung 54 in das hülsenförmige Bauteil 42 eingeführt werden kann.

Wie in Fig. 1 dargestellt, ist der Flansch 58 am zweiten Kolben 26 so gestaltet, daß nach dem Zusammenfügen mit dem hülsenförmigen Bauteil 42 keine axiale Relativbewegung zwischen dem hülsenförmigen Bauteil 42 und dem zweiten Kolben 26 mehr möglich ist.

Um seine Durchströmbarkeit mit Hydraulikfluid zu verbessern, weist das hülsenförmige Bauteil 42 in seiner der Einführöffnung 54 gegenüberliegenden Mantelfläche eine längliche Durchbrechung 60 auf.

Die Figuren 3a bis 3c zeigen ein abgewandeltes Ausführungsbeispiel des hülsenförmigen Bauteils 42, bei dem die beiden Aufnahmeflansche 52 und 56 sich zu gegenüberliegenden Seiten des hülsenförmigen Bauteils 42 hin öffnen. Das hülsenförmige Bauteil 42 selbst ist auf zwei axial verlaufende Stege 62 reduziert, an deren Enden die beiden Aufnahmeflansche 52 und 56 einstückig befestigt sind. Während dem zweiten Aufnahmeflansch 56 analog dem in Fig. 2 dargestellten Ausführungsbeispiel eine sich über die gesamte Länge des hülsenförmigen Bauteils 42 erstreckende Einführöffnung 54' zugeordnet ist, ist die dem ersten Aufnahmeflansch 52 zugeordnete Einführöffnung 54 benachbart zum zweiten Aufnahmeflansch 56 angeordnet. Ein an dem einen Steg 62 einstückig ausgebildeter, leistenförmiger Fortsatz 64 verkleinert auf dem Rest der Erstreckung des hülsenförmigen Bauteils 42 den Öffnungsquerschnitt derart, daß der Flansch 46 durch den in der Mantelfläche des hülsenförmigen Bauteils 42 verbleibenden Öffnungsquerschnitt nicht hindurch paßt. Auf diese Weise sorgt der leistenförmige Fortsatz 64, nachdem der Flansch 46 durch die Einführöffnung 54 in das hülsenförmige Bauteil 42 eingeführt worden ist, für eine seitliche Führung des Flansches 46 und verhindert darüber hinaus, daß der Flansch 46 seitlich aus dem hülsenförmigen Bauteil 42 heraus gedrückt werden kann.

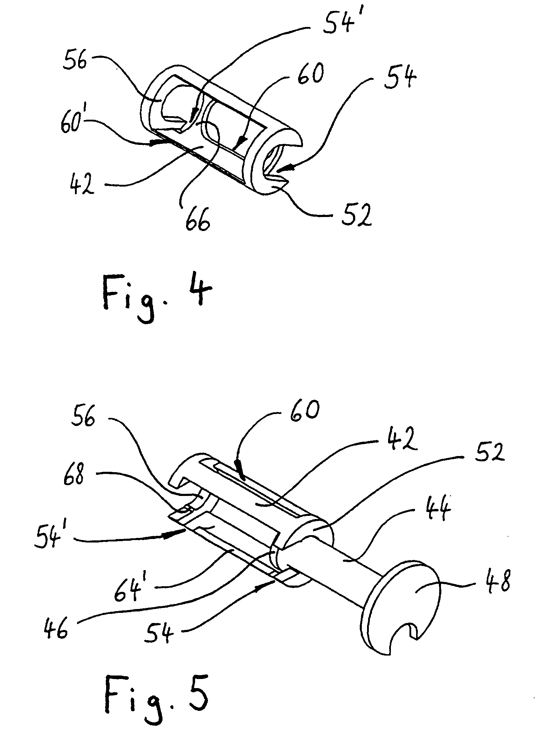

Bei der in Fig. 4 dargestellten, weiteren Abwandlung des hülsenförmigen Bauteils 42 öffnen sich die beiden Aufnahmeflansche 52 und 56 wiederum zur selben Seite hin, jedoch ist jedem Aufnahmeflansch 52, 56 eine eigene Einführöffnung 54 bzw. 54' zugeordnet. Die beiden Einführöffnungen 54, 54' sind durch einen Mantelabschnitt 66 des hülsenförmigen Bauteils 42 voneinander getrennt, der mit einer Durchbrechung 60 versehen ist und analog dem leistenförmigen Fortsatz 64 eine verbesserte seitliche Führung für den Flansch 46 bereitstellt. Zusätzlich zu der Durchbrechung 60 ist gegenüber derselben eine weitere, noch größere Durchbrechung 60' vorhanden.

Bei dem in Fig. 5 gezeigten Ausführungsbeispiel der Fesselungseinrichtung 40 öffnen sich wiederum beide Aufnahmeflansche 52, 56 zur selben Seite des hülsenförmigen Bauteils 42 hin. In Übereinstimmung mit dem in Fig. 4 dargestellten Ausführungsbeispiel ist jedem Aufnahmeflansch 52, 56 eine eigene Einführöffnung 54 bzw. 54' zugeordnet, jedoch sind diese beiden Einführöffnungen 54, 54' nicht wie im Fig. 4 vollständig voneinander getrennt, sondern werden lediglich von einem leistenförmigen Fortsatz 64' begrenzt, stehen ansonsten aber durch einen Ausschnitt in der Mantelfläche des hülsenförmigen Bauteils 42 miteinander in Verbindung. Damit auch an denjenigen Stellen, an denen der leistenförmige Fortsatz 64' nicht vorhanden ist, ein seitliches Auseinandergleiten der beiden Bauteile 42 und 44 zumindest erschwert ist, ist jeder Aufnahmeflansch 52 und 56 mit zwei Rastvorsprüngen 68 versehen, deren Widerstand beim seitlichen Einführen des stiftförmigen Bauteils 44 bzw. des am zweiten Kolben 26 vorhandenen Flansches 58 in das hülsenförmige Bauteil 42 überwunden werden muß.

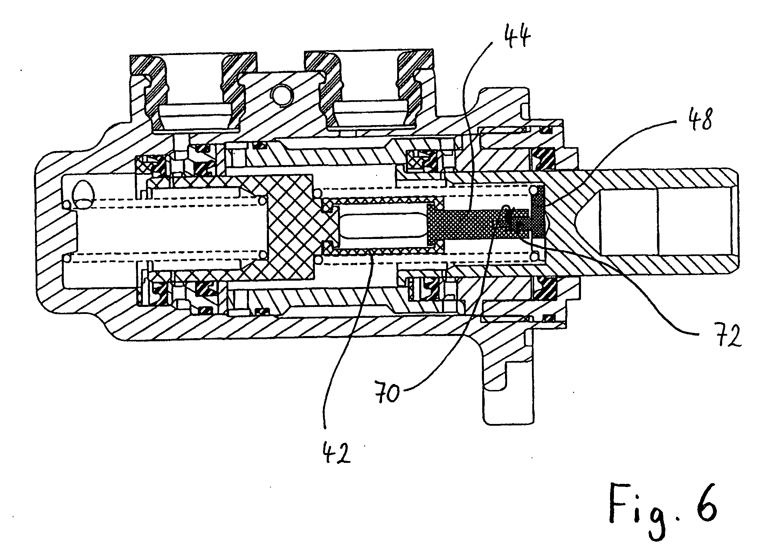

Fig. 6 zeigt schließlich ein Ausführungsbeispiel der Fesselungseinrichtung 40, dessen maximale Länge einstellbar ist. Hierzu ist im stiftförmigen Bauteil 44 an seinem vom hülsenförmigen Bauteil 42 entfernten Ende eine Bohrung 70 vorgesehen, in die ein entsprechender Zapfen 72 des Federhaltekopfes 48 eintaucht. Nach dem die Länge des stiftförmigen Bauteils 44 durch mehr oder weniger weites Eintauchen des Zapfens 72 in die Bohrung 70 wie gewünscht justiert worden ist, wird der Zapfen 72 in der Bohrung 70 verklebt oder verschweißt, z.B. ultraschallverschweißt, so daß eine einstückige Verbindung zwischen dem Federhaltekopf 48 und dem Rest des stiftförmigen Bauteils 44 hergestellt ist.

Bei allen Ausführungsbeispielen der Fesselungseinrichtung 40 können das hülsenförmige Bauteil 42 und/oder das stiftförmige Bauteil 44 aus Metall oder auch aus einem geeigneten Kunststoff bestehen.

## Patentansprüche

1. Hauptzylinder (10) für eine hydraulische Fahrzeugbremsanlage, mit
- einem Gehäuse (12) und einer darin ausgebildeten Bohrung (14), in der ein erster Kolben (24) und ein in axialem Abstand zu diesem angeordneter zweiter Kolben (26) abdichtend und verschiebbar geführt sind, und
- einer zwischen dem ersten Kolben (24) und dem zweiten Kolben (26) angeordneten Fesselungseinrichtung (40) für eine Rückstellfeder (38) des ersten Kolbens (24), die die Rückstellfeder (38) daran hindert, über ein bestimmtes Maß hinaus komprimiert und expandiert zu werden, wobei die Fesselungseinrichtung (40) aus einem ersten, im wesentlichen hülsenförmigen Bauteil (42) und einem damit lösbar verbundenen zweiten, im wesentlichen stiftförmigen Bauteil (44) besteht, wobei das stiftförmige Bauteil (44) an seinem dem hülsenförmigen Bauteil (42) zugewandten Ende einen radial nach außen ragenden Flansch (46) und das hülsenförmige Bauteil (42) an seinem zugehörigen Ende einen ersten radial nach innen ragenden, U-förmigen Aufnahmeflansch (52) aufweist, der mit dem radial nach außen ragenden Flansch (46) am stiftförmigen Bauteil (44) formschlüssig derart zusammenwirkt, daß die beiden Bauteile (42; 44) axial nicht auseinanderbewegbar sind, und wobei das hülsenförmige Bauteil (42) in seiner Mantelfläche eine mit dem offenen Bereich des ersten Aufnahmeflansches (52) verbundene Einführöffnung (54) aufweist, die das seitliche Einführen des am stiftförmigen Bauteil (44) vorhandenen Flansches (46) in das hülsenförmige Bauteil (42) gestattet,
**dadurch gekennzeichnet, daß** das vom stiftförmigen Bauteil (44) entfernte Ende des hülsenförmigen Bauteils (42) einen zweiten, radial nach innen ragenden, U-förmigen Aufnahmeflansch (56) aufweist, der mit einem radial nach außen ragenden Flansch (58) am zweiten Kolben (26) formschlüssig derart zusammenwirkt, daß das hülsenförmige Bauteil (42) und der zweite Kolben (26) axial nicht auseinanderbewegbar sind, und daß das hülsenförmige Bauteil (42) in seiner Mantelfläche eine mit dem offenen Bereich des zweiten U-förmigen Aufnahmeflansches (56) verbundene Einführöffnung (54 oder 54') aufweist, die das seitliche Einführen des am zweiten Kolben (26) vorhandenen Flansches (58) in das hülsenförmige Bauteil (42) gestattet.

2. Hauptzylinder nach Anspruch 1,
**dadurch gekennzeichnet, daß** die mit dem offenen Bereich des ersten Aufnahmeflansches (52) verbundene Einführöffnung (54) in der Mantelfläche des hülsenförmigen Bauteils (42) das seitliche Einführen des am stiftförmigen Bauteil (44) vorhandenen Flansches (46) in das hülsenförmige Bauteil (42) nur in einem axial von dem ersten Aufnahmeflansch (52) entfernten Bereich gestattet.

3. Hauptzylinder nach Anspruch 1 oder 2,
**dadurch gekennzeichnet, daß** der erste U-förmige Aufnahmeflansch (52) und der zweite U-förmige Aufnahmeflansch (56) sich zur selben Seite des hülsenförmigen Bauteils (42) hin öffnen.

4. Hauptzylinder nach Anspruch 3,
**dadurch gekennzeichnet, daß** sich eine einzige Einführöffnung (54) in der Mantelfläche des hülsenförmigen Bauteils (42) vom offenen Bereich des ersten U-förmigen Aufnahmeflansches (52) bis zum offenen Bereich des zweiten U-förmigen Aufnahmeflansches (56) erstreckt.

5. Hauptzylinder nach Anspruch 3,
**dadurch gekennzeichnet, daß** ein Mantelabschnitt (66) des hülsenförmigen Bauteils (42) die beiden Einführöffnungen (54, 54') voneinander trennt.

6. Hauptzylinder nach Anspruch 1 oder 2,
**dadurch gekennzeichnet, daß** der erste U-förmige Aufnahmeflansch (52) und der zweite U-förmige Aufnahmeflansch (56) sich zu gegenüberliegenden Seiten des hülsenförmigen Bauteils (42) hin öffnen.

7. Hauptzylinder nach einem der vorhergehenden Ansprüche,
**dadurch gekennzeichnet, daß** der erste Aufnahmeflansch (52) und/oder der zweite Aufnahmeflansch (56) einen Rastvorsprung (68) aufweisen, der nach dem Zusammenfügen des ersten Aufnahmeflansches (52) mit dem stiftförmigen Bauteil (44) und/oder des zweiten Aufnahmeflansches (56) mit dem zweiten Kolben (26) ein selbsttätiges Lösen der geschaffenen Verbindung verhindert.

8. Hauptzylinder nach einem der vorhergehenden Ansprüche,
**dadurch gekennzeichnet, daß** der Mantel des hülsenförmigen Bauteils (42) eine oder mehrere Durchbrechungen (60) aufweist.

9. Hauptzylinder nach einem der vorhergehenden Ansprüche,
**dadurch gekennzeichnet, daß** das stiftförmige Bauteil (44) an seinem vom hülsenförmigen Bauteil (44) entfernten Ende eine Bohrung (70) aufweist, in die ein mit der Bohrung (70) verklebter oder verschweißter Zapfen (72) eines Federhaltekopfes (48) eintaucht.

## Claims

1. Master cylinder (10) for a hydraulic vehicle braking system, comprising
- a housing (12) and a bore (14) formed therein, in which bore a first piston (24) and a second piston (26), which is arranged at an axial distance from the first piston, are guided in a sealing and displaceable manner, and
- a restraining device (40), which is arranged between the first piston (24) and the second piston (26), for a return spring (38) of the first piston (24), which device prevents the return spring (38) from being compressed and expanded beyond a certain extent, wherein the restraining device (40) consists of a first, substantially sleeve-shaped component (42) and a second, substantially pin-shaped component (44) which is connected to the first component such that it can be disengaged, wherein the pin-shaped component (44) comprises at its end which faces the sleeve-shaped component (42) a flange (46) which projects radially outwards and the sleeve-shaped component (42) comprises at its associated end a first, U-shaped receiving flange (52) which projects radially inwards and which positively interacts with the flange (46), which projects radially outwards, on the pin-shaped component (44) such that the two components (42; 44) cannot move apart in the axial direction, and wherein the sleeve-shaped component (42) comprises in its circumferential surface area an introduction opening (54) which communicates with the open region of the first receiving flange (52) and which enables the flange (46) provided on the pin-shaped component (44) to be laterally introduced into the sleeve-shaped component (42),
**characterised in that** the end of the sleeve-shaped component (42) which is remote from the pin-shaped component (44) comprises a second, U-shaped locating flange (56) which projects radially inwards and which positively interacts with a flange (58) on the second piston (26) which projects radially outwards such that the sleeve-shaped component (42) and the second piston (26) cannot move apart in the axial direction, and that the sleeve-shaped component (42) comprises in its circumferential surface area an introduction opening (54 or 54') which communicates with the open region of the second U-shaped receiving flange (56), which enables the flange (58) provided on the second piston (26) to be laterally introduced into the sleeve-shaped component (42).

2. Master cylinder according to Claim 1,
**characterised in that** the introduction opening (54) in the circumferential surface area of the sleeve-shaped component (42) which communicates with the open region of the first receiving flange (52) only allows the flange (46) provided on the pin-shaped component (44) to be laterally introduced into the sleeve-shaped component (42) in a region which is axially remote from the first receiving flange (52).

3. Master cylinder according to Claim 1 or 2,
**characterised in that** the first U-shaped receiving flange (52) and the second U-shaped receiving flange (56) open towards the same side of the sleeve-shaped component (42).

4. Master cylinder according to Claim 3,
**characterised in that** a single introduction opening (54) extends in the circumferential surface area of the sleeve-shaped component (42) from the open region of the first U-shaped receiving flange (52) to the open region of the second U-shaped receiving flange (56).

5. Master cylinder according to Claim 3,
**characterised in that** a circumferential surface portion (66) of the sleeve-shaped component (42) separates the two introduction openings (54, 54') from one another.

6. Master cylinder according to Claim 1 or 2,
**characterised in that** the first U-shaped receiving flange (52) and the second U-shaped receiving flange (56) open towards opposite sides of the sleeve-shaped component (42).

7. Master cylinder according to one of the preceding Claims,
**characterised in that** the first receiving flange (52) and/or the second receiving flange (56) comprise(s) a latching projection (68) which, after the first receiving flange (52) has been joined to the pin-shaped component (44) and/or the second receiving flange (56) to the second piston (26), prevents an automatic disengagement of the established connection.

8. Master cylinder according to one of the preceding Claims,
**characterised in that** the circumferential surface of the sleeve-shaped component (42) comprises one or more apertures (60).

9. Master cylinder according to one of the preceding Claims,
**characterised in that** the pin-shaped component (44) comprises, at its end which is remote from the sleeve-shaped component (44), a bore (70) which is entered by a stud (72), bonded or welded to the bore (70), of a spring holding head (48).

## Revendications

1. Cylindre principal (10) pour une installation de freinage hydraulique d'un véhicule, comprenant
- un carter (12) muni d'un alésage (14) dans lequel un premier piston (24) et un deuxième piston (26) disposé à une distance axiale par rapport au premier piston, sont guidés de manière étanche et déplaçable en translation, un dispositif de retenue (40) pour un ressort de rappel (38) du premier piston (24), disposé entre le premier piston (24) et le deuxième piston (26), qui empêche le ressort de rappel (38) d'être compressé et expansé au-delà d'une mesure déterminée, le dispositif de retenue (40) étant composé d'une première pièce essentiellement en forme de manchon (42) et d'une deuxième pièce essentiellement en forme de tige (44) raccordée de manière amovible à la première pièce, la pièce en forme de tige (44) comportant à son extrémité dirigée vers la pièce en forme de manchon (42) un collet (46) dirigé radialement vers l'extérieur, et la pièce en forme de manchon (42) comportant à son extrémité correspondante un premier collet de réception (52) en forme de U dirigé radialement vers l'intérieur qui coopère avec le collet dirigé radialement vers l'extérieur (46) de la pièce en forme de tige (44) en engagement de forme de telle manière que les deux pièces (42; 44) ne peuvent pas se déplacer axialement séparément, la pièce en forme de manchon (42) comportant dans sa surface latérale une ouverture d'insertion (54) reliée à la partie ouverte du premier collet de réception (52) et permettant l'introduction latérale du collet (46) de la pièce en forme de tige (44) dans la pièce en forme de manchon (42),
**caractérisé en ce que** l'extrémité de la pièce en forme de manchon (42) opposée à la pièce en forme de tige (44) comporte un deuxième collet de réception en forme d'U (56) dirigé radialement vers l'intérieur qui coopère avec un collet (58) dirigé radialement vers l'extérieur du deuxième piston (26) en engagement de forme de telle manière que la pièce en forme de manchon (42) et le deuxième piston (26) ne peuvent pas se déplacer axialement séparément, et que la pièce en forme de manchon (42) comprend dans la face latérale une ouverture d'introduction (54 ou 54') raccordée à la partie ouverte du deuxième collet de réception (56) en forme d'U permettant l'introduction latérale du collet (58) prévu sur le deuxième piston (26) dans la pièce en forme de manchon (42).

2. Cylindre principal selon la revendication 1, **caractérisé en ce que** l'ouverture d'introduction (54) prévue dans la surface latérale de la pièce en forme de manchon (42), reliée à la partie ouverte du premier collet de réception (52), ne permet l'introduction latérale du collet (46) prévu sur la pièce en forme de tige (44) dans la pièce en forme de manchon (42) que dans une partie axialement éloignée du premier collet de réception (52).

3. Cylindre principal selon la revendication 1 ou 2, **caractérisé en ce que** le premier collet de réception (52) en forme d'U et le deuxième collet de réception (56) en forme d'U s'ouvrent au même côté de la pièce en forme de manchon (42).

4. Cylindre principal selon la revendication 3, **caractérisé en ce qu'**une seule ouverture d'introduction (54) s'étend dans la surface latérale de la pièce en forme de manchon (42) à partir de la partie ouverte du premier collet de réception (52) en forme d'U jusqu'à la partie ouverte du deuxième collet de réception (56) en forme d'U.

5. Cylindre principal selon la revendication 3, **caractérisé en ce qu'**une partie de la surface latérale (66) de la pièce en forme de douille (42) sépare les deux ouvertures d'introduction (54, 54') l'une de l'autre.

6. Cylindre principal selon la revendication 1 ou 2, **caractérisé en ce que** le premier collet de réception (52) en forme d'U et le deuxième collet de réception (56) en forme d'U s'ouvrent aux côtés opposés de la pièce en forme de manchon (42).

7. Cylindre principal selon l'une des revendications précédentes, **caractérisé en ce que** le premier collet de réception (52) et/ou le deuxième collet de réception (56) comportent une partie d'encliquetage en saillie (68) qui empêche, après l'assemblage du premier collet de réception (52) avec la pièce en forme de tige (44) et/ou du deuxième collet de réception (56) avec le deuxième piston (26), une séparation spontannée de la liaison établie.

8. Cylindre principal selon l'une des revendications précédentes, **caractérisé en ce que** la surface latérale de la pièce en forme de manchon (42) comprend un ou plusieurs évidements (60).

9. Cylindre principal selon l'une des revendications précédentes, **caractérisé en ce que** la pièce en forme de tige (44) comporte à son extrémité opposée à la pièce en forme de manchon (44) un alésage (70) dans lequel plonge un tenon (72) d'une tête de retenue de ressort (48), le tenon étant collé ou soudé dans l'alésage (70).
